# EUROPÄISCHE PATENTSCHRIFT

(11) **EP 0 412 932 B1**
(45) Veröffentlichungstag und Bekanntmachung des Hinweises auf die Patenterteilung: **27.10.1993**
(21) Anmeldenummer: 90810566.1
(22) Anmeldetag: 23.07.1990
(51) Int. Cl.: B65G 1/04, B65G 1/12

(54) **Stapler, insbesondere für einen Offsetplatten-Transporteur**
Stacker, especially for an offset plate conveyor
Empileur notamment pour un convoyeur de plaques offset

(30) Priorität: 09.08.1989 CH 2930/89
(43) Veröffentlichungstag der Anmeldung: 13.02.1991
(73) Patentinhaber: GRAPHA-HOLDING AG, 6052 Hergiswil (CH)
(72) Erfinder: Maier, Willy, CH-8302 Kloten (CH)
(74) Vertreter: Groner, Manfred

(56) Entgegenhaltungen:
- DD-A- 72 508
- DD-B- 147 344
- DE-B- 2 335 290

## Beschreibung

Die Erfindung betrifft einen Stapler nach dem Oberbegriff des unabhängigen Patentanspruchs 1.

Ein Stapler dieser Art ist Gegenstand der DE-B-23 35 290. Dieser dient zur automatischen Zu- und Abführung von Prüflingen an einer Prüfeinrichtung. Dazu ist eine Speichertrommel vorgesehen, von der mittels einer Uebergabevorrichtung Prüflinge einer Prüfeinrichtung zuführbar sind.

Für den Transport der Prüflinge ist je Speicherplatz ein längsbeweglicher Träger vorgesehen, auf den die Prüflinge aufgesetzt werden können. Die Träger können durch eine einem Führungskanal zugeordnete Antriebseinrichtung erfasst und in den Führungskanal überführt werden. Dieser Stapler eignet sich nicht zum Stapeln von empfindlichen und in Serie stetig anfallenden Druckplatten.

Ein Stapler für Druckplatten ist Gegenstand der Europäischen Patentanmeldung EP 89 810 439.3. (EP-0 351 356). Bei diesem werden die Druckplatten vertikal von oben nach unten bewegt und in oben offene Fächer eingelegt. Dieser Stapler eignet sich besonders für flexible Druckplatten, jedoch weniger für harte Offsetplatten. Wünschbar wäre auch ein Stapler, der bei gleichem Raum das einfache Stapeln einer höheren Anzahl Druckplatten ermöglicht.

Der Erfindung liegt somit die Aufgabe zugrunde, einen Stapler der genannten Gattung zu schaffen, der sich besonders zum Stapeln von harten Druckplatten und insbesondere von harten Offsetplatten eignet und der bei einfacher Bedienung eine hohe Stapeldichte aufweist. Die Aufgabe wird durch die Erfindung gemäss Anspruch 1 gelöst.

Die um eine horizontale Achse rotierbare Speichertrommel erlauben ein einfaches und sehr schonendes Einlegen der Druckplatten. Die Druckplatten werden nicht gebogen, sondern können durch vertikale und horizontale geradlinige Bewegungen in die Zellen eingelegt werden. Durch die Wahl des Trommeldurchmessers und die Anzahl der Trommeln kann jeweils die genau gewünschte Anzahl Zellen erreicht werden.

Eine besonders einfache und raumsparende Anordnung ergibt sich dann, wenn gemäss einer Weiterbildung der Erfidnung mehrere Speichertrommeln übereinander angeordnet sind. Sind zwei speicher einheiten mit mehreren Trommeln nebeneinander angeordnet, so ergibt eine besonders schnelle Zuführung der Druckplatten zu den Speichertrommeln. Mit einem Minimum an Bewegung kann durch Rotation einer Trommel jeweils eine leere Zelle in eine für die Beschickung geeignete Position gefahren werden. In der Regel ist gleichzeitig bei den anderen Speichertrommeln ein Entladen möglich.

Das radiale Einlegen der Druckplatten in die Zellen kann in konstruktiv besonders einfacher Weise durch ein Förderorgan erfolgen, das die Platten durch eine horizontale und bezüglich der Trommel radiale Bewegung in die Trommeln einschiebt. Durch eine Lehne, können die Druckplatten vertikal oder vorzugsweise leicht geneigt auf dem Förderorgan gehalten werden.

Ein besonders schonendes Ablegen der Platten auf den Trommelbeschicker bzw. den Förderorgan kann gemäss einer Weiterbildung der Erfindung durch ein Schieber erfolgen, welcher die Druckplatte um die obere Kante verschwenkt, so dass die untere Kante auf dem Förderorgan einem der vertikalen Transportbewegung aufsteht, und schliesslich die Druckplatte am oberen Ende ausgehängt wird. Durch weitere Bewegung des Schiebers wird schliesslich auch der obere Rand der Druckplatte und die untere Kante verschwenkt und die Druckplatte an die Lehne angelegt.

Weitere vorteilhafte Merkmale ergeben sich aus den abhängigen Ansprüchen sowie aus der Beschreibung und den Zeichnungen.

Ein Ausführungsbeispiel der Erfindung wird nachfolgend anhand der Zeichnungen näher erläutert. Es zeigen:
- Fig. 1: in schematischer Darstellung eine Ansicht eines erfindungsgemässen Staplers mit zwei Einheiten zu je drei Speichertrommeln,
- Fig. 2: eine Draufsicht auf den Stapler gemäss Fig. 1, ebenfalls in schematischer Darstellung, und
- Fig. 3: in schematischer Darstellung eine Ansicht eines Trommelbeschickers.

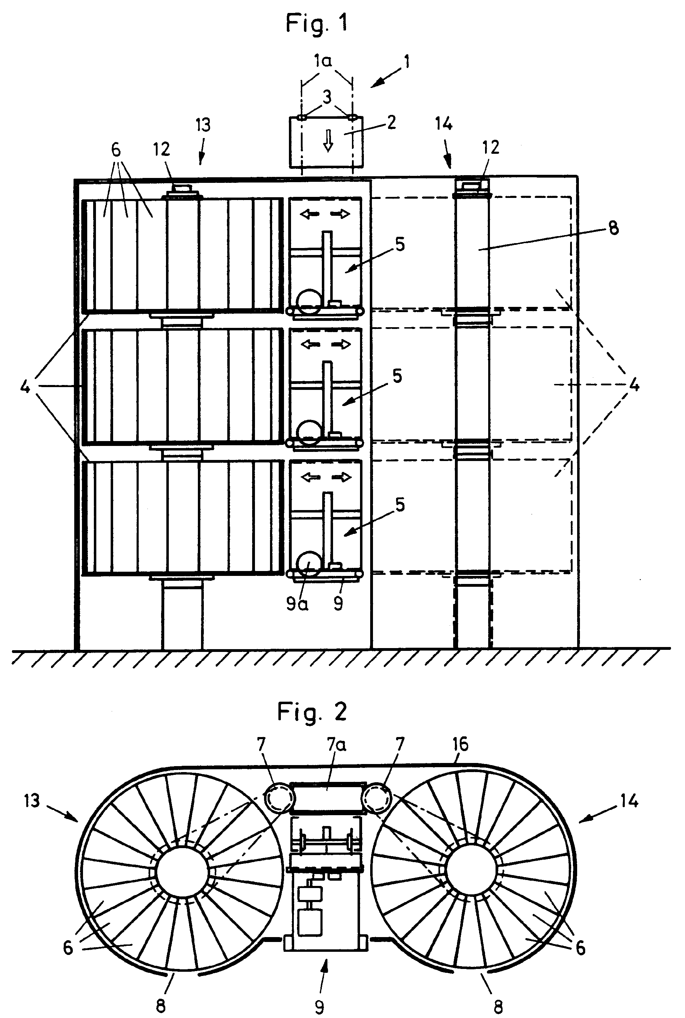

Der in den Fig. 1 und 2 gezeigte Sortierer besitzt zwei Einheiten 13 und 14, die jeweils drei übereinander angeordnete Speichertrommeln 4 aufweisen. Die Speichertrommeln 4 sind jeweils an einem Träger 12 rotierbar befestigt. Zwischen den Einheiten 13 und 14 sind ein Antrieb 7 sowie eine Steuervorrichtung 7a angeordnet, mit denen die Rotationsbewegungen der Speichertrommeln steuerbar ausgeführt werden können. Vorzugsweise sind die Speichertrommel 4 einzeln und unabhängig von den anderen Speichertrommeln 4 rotierbar. Antriebe und Steuerungen dieser Art sind dem Fachmann an sich bekannt. Denkbar ist auch eine Sortiervorrichtung mit Einheiten, die mehr als drei Speichertrommel übereinander aufweisen.

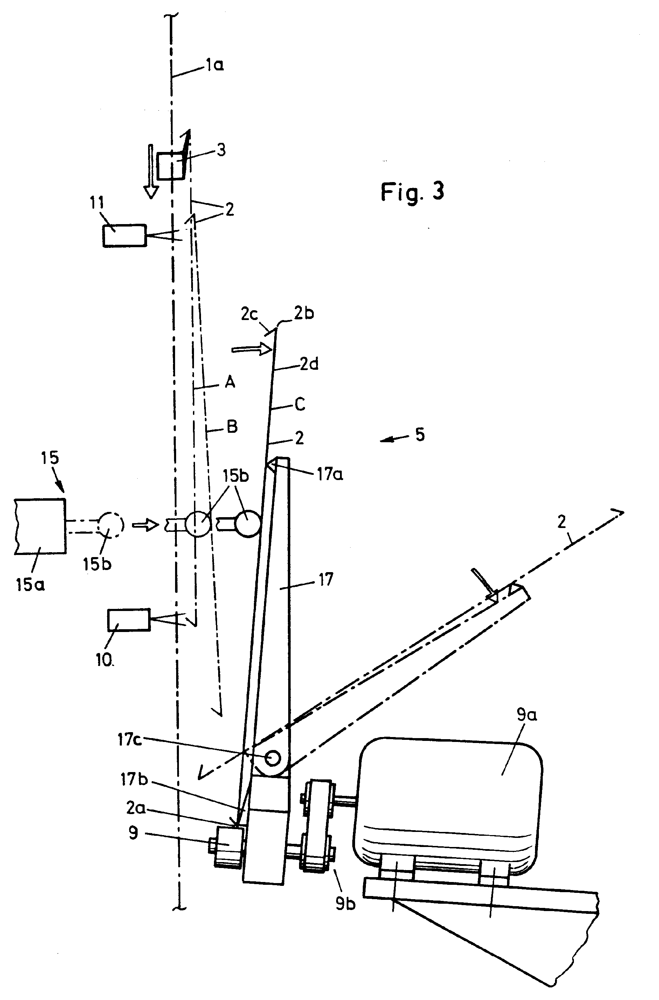

Ebenfalls zwischen den Einheiten 13 und 14 befindet sich eine Fördereinrichtung 1, mit welcher Offsetplatten 2 zwischen den Einheiten 13 und 14 von oben nach unten bewegt werden. Die Fördereinrichtung 1 besitzt zwei parallele und flexible Förderketten 1a, an denen in gleichen Abständen Traglaschen 3 angebracht sind. Die Platten 2 besitzen in Fig. 3 gezeigt am oberen Rand einen Rückbug 2c, an den die Platten jeweils an zwei Traglaschen eingehängt sind.

Die Druckplatten 2 durchfahren im Bereich der Trommeln 3 Trommelbeschicker 5 oder werden von einem Trommelbeschicker 5 in eine Speicherzelle 6 einer Speichertrommel 4 eingelegt. Wie die Fig. 3 zeigt, besitzt jeder Trommelbeschicker 5 ein Bandförderorgan 9, das von einem Motor 9a über ein Getriebe 9b wahlweise in der einen oder anderen Richtung bewegt werden kann. Soll eine Platte 2 einen Trommelbeschicker 5 passieren, so wird diese im Bereich des Trommelbeschickers 5 nicht beeinflusst, sondern wird an dieser wie in Fig. 3 (Position A) gezeichnet vertikal hängend nach unten bewegt. Soll eine Druckplatte 2 hingegen vom Trommelbeschicker 5 in eine Speicherzelle 6 eingelegt werden, so wird die untere Kante der Druckplatte 2 von einem optischen Sensor 10 registriert, der unterhalb eines Schiebers 15 angeordnet ist. Sobald die untere Kante 2a sich auf der Höhe des optischen Sensors 10 befindet, wird der Schieber über eine hier nicht gezeigte Steuereinrichtung angesteuert und ein Arm 15b bewegt von einem Druckzylinder 15a gegen die Druckplatte 2 und schwenkt diese von der Position A in die Position B. Hierbei wird die Geschwindigkeit der Fördereinrichtung 1 nicht verlangsamt, so dass die Druckplatte 2 weiter nach unten bewegt wird und der Arm 15b auf der Rückseite der Platte 2 gleitend diese weiter so verschwenkt, dass die untere Kante 2a der Platte oben auf dem Förderorgan 9 schliesslich auftrifft und die Platte 2 an den Traglaschen 3 ausgehängt wird. Eine weitere Bewegung des Arms 15b verschwenkt die Druckplatte 2 um die untere Kante 2a und legt sie an eine bezüglich der Förderketten Ja geneigte Lehne 17. In dieser Lage C ist die Druckplatte entsprechend der Lehne 17 geneigt und liegt mit ihrer Vorderseite unten und oben an gummielastischen und punktförmigen Körpern 17a und 17b an. Die Platte 2 kann von Hand entnommen werden, wenn die Lehne 17 um die Achse 17c in die strichpunktiert gezeigte Lage nach hinten verschwenkt wird. In der Regel wird jedoch die Druckplatte 2 durch das Förderorgan 9 in eine leere Speicherzelle 6 einer Speichertrommel 4 eingelegt. Dazu wird eine der Speichertrommeln 4 neben der Druckplatte 2 rotiert, bis eine leere Speicherzelle 6 wie in Fig. 2 gezeigt neben der Druckplatte 2 angeordnet ist. In der Regel ist eine leere Speicherzelle bereits positioniert, wenn die Platte 2 auf das Förderorgan 9 gelegt wird. Selbstverständlich wird eine Druckplatte nur dann auf einen Trommelbeschicker 5 abgelegt, wenn auf seiner Höhe leere Speicherzellen 6 vorhanden sind. Durch das Förderorgan 9 wird die Druckplatte 2 gemäss Fig. 2 entweder nach links oder nach rechts horizontal in eine Speicherzelle eingeschoben. Vorzugsweise besitzen die Speicherzellen hier nicht gezeigte Mittel, die verhindern, dass die in die Speicherzellen eingelegten Druckplatten wieder aus diesen, beispielsweise durch einen Rückprall, herausfallen können. Wesentlich ist, dass beim Einlegen einer Platte 2 in eine Speicherzelle 6 die Fördereinrichtung 1 nicht gestoppt oder verlangsamt werden muss. Es ist deshalb an sich möglich, dass gleichzeitig mehrere Druckplatten 2 in Speicherzellen 6 eingelegt werden.

Die Druckplatten 2 werden in der Regel von Hand den Speichertrommeln 4 entnommen. Dazu weist ein Gehäuse 16 für jede Einheit 13 bzw. 14 je einen Entladeschlitz 8 auf. Die numerierten und registrierten Druckplatten 2 können durch gesteuerte Rotation der entsprechenden Speichertrommel 4 durch eine Rotation dieser Speichertrommel 4 in eine Position gebracht werden, in welcher sie durch den Entladeschlitz 8 entnommen werden kann.

Die Trommeln 4 besitzen beispielsweise 32 Speicherzellen 6 und können jeweils unabhängig im Uhrzeigersinn oder in Gegenuhrzeigersinn bewegt werden. Diese Anordnung erlaubt mit minimalen Bewegungen ein schnelles Laden und Entladen der Speicherzellen 6. In der Regel werden die oberen zwei Speichertrommeln 4 zuerst vollständig gefüllt, bevor die unteren Speichertrommeln 4 beladen werden. Dies entspricht dem Prinzip, dass jeweils die nächstliegende leere Speicherzelle 6 angesteuert wird.

Wie bereits erwähnt, können auch mehr als drei Speichertrommeln übereinander angeordnet sein. Ebenfalls denkbar ist eine einfache Ausführung mit lediglich einer Speichertrommel und einem Trommelbeschicker 5. Die Anzahl der Speicherzellen 6 pro Speichertrommel 4 kann insbesondere durch einen grösseren bzw. kleineren Radius der Speichertrommeln 6 vergrössert bzw. verkleinert werden. Mit dem erfindungsgemässen Stapler können somit Kundenwünsche zur Anzahl der Speicherzellen und auch zur Breite oder Höhe des Staplers ohne grundsätzliche Aenderungen berücksichtigt werden. Trotz den oben genannten Vorteilen kann der erfindungsgemässe Stapler mit verhältnismässig wenigen, einfachen und robusten Bauteilen hergestellt werden. Erfindungsgemäss ist somit ein Sortierer geschaffen worden, der den fördertechnischen Anforderungen, einschliesslich einer schonenden Behandlung von Offsetplatten Rechnung trägt und der trotzdem kostengünstig hergestellt werden kann.

Denkbar ist auch eine Ausführung, bei welcher lediglich eine Trommel 6 vorgesehen ist und bei welcher die Platten 2 nicht radial sondern axial in die entsprechend oben offenen Zellen 6 eingelegt werden. Bei dieser allerdings eine wesentlich kleinere Speicherkapazität aufweisenden Ausführung werden somit die Platten 2 von oben in die Zellen 6 eingelegt.

## Patentansprüche

1. Stapler mit einer Fördereinrichtung (1), mit welcher Platten (2) einzeln wenigstens einer Speichereinheit zuführbar sind, wobei die Speichereinheit wenigstens eine rotierbare Speichertrommel (4) mit offenen Zellen (6) aufweist und wenigstens ein Trommelbeschicker (5) vorgesehen ist, der die Platten (2) von der Fördereinrichtung (1) übernimmt und in die Zellen (6) einlegt, dadurch gekennzeichnet, dass die Fördereinrichtung (1) die Platten (2) parallel zur Rotationsachse der Speichertrommel (4) fördert und der Trommelbeschicker (5) Mittel (15,17) aufweist, mit denen Platten (2) an den Trommelbeschicker (5) übergebbar und auf diesem abstellbar sind.

2. Stapler nach Anspruch 1, dadurch gekennzeichnet, dass mehrere Speichertrommeln (4) übereinander angeordnet und unabhängig voneinander rotierbar sind und dass jeder Speichertrommel (4) ein Trommelbeschicker (5) zugeordnet ist, der die Platten (2) radial in die Zellen (6) der Speichertrommel (4) einlegt.

3. Stapler nach Anspruch 2, dadurch gekennzeichnet, dass zwei Einheiten (13,14) aus übereinander angeordneten Speichertrommeln (4) vorgesehen sind und dass die Trommelbeschicker (5) zwischen diesen Einheiten (13,14) angeordnet und so ausgebildet sind, dass jede Platte (2) wahlweise der einen oder der anderen Einheit (13,14) zuführbar ist.

4. Stapler nach einem der Ansprüche 1 bis 3, dadurch gekennzeichnet, dass der Trommelbeschicker (5) ein Förderorgan (9) aufweist, auf welches eine sich vertikal von oben nach unten bewegende Platte (2) abstellbar ist, dass mit dem Förderorgan (9) die abgestellte Platte (2) in eine Zelle (6) einschiebbar ist und dass der Trommelbeschicker (5) eine Lehne (17) aufweist, an welcher die auf dem Förderorgan (9) abgestellte Platte (2) stehend angelegt werden kann.

5. Stapler nach Anspruch 4, dadurch gekennzeichnet, dass der Trommelbeschicker (5) einen Schieber (15) aufweist, der eine auf dem Förderorgan (9) abzustellende Platte (2) um eine obere fixierte Kante (2b) schwenkt und dadurch die untere Kante (2a) in eine Position über dem Förderorgan (9) bringt, derart, dass die Platte (2) bei einer weiteren Bewegung nach unten auf das Förderorgan (9) abgestellt wird.

6. Stapler nach Anspruch 5, dadurch gekennzeichnet, dass ein Sensor (10) vorgesehen ist, der das Vorhandensein einer durch den Schieber (15) zu verschwenkende Platte (2) anzeigt.

7. Stapler nach Anspruch 6, dadurch gekennzeichnet, dass der Sensor (10) auf die untere Kante (2a) der Platte (2) anspricht.

8. Stapler nach einem der Ansprüche 1 bis 7, dadurch gekennzeichnet, dass die Fördereinrichtung (1) Traglaschen (3) aufweist, in die eine Platte (2) mit einem Rückbug (2c) an der oberen Kante (2b) einhängbar ist.

9. Stapler nach einem der Ansprüche 4 bis 7, dadurch gekennzeichnet, dass die Lehne (17) zur Handentnahme der Platte (2) verschwenkbar ist.

## Claims

1. Stacker with a conveyor device (1), with which plates (2) can be supplied individually to at least one storage unit, wherein the storage unit has at least one rotary storage drum (4) with open compartments (6) and at least one drum loader (5) is provided which takes the plates (2) from the conveyor device (1) and inserts them into the compartments (6), characterised in that the conveyor device (1) conveys the plates (2) parallel to the axis of rotation of the storage drum (4) and the drum loader (5) has means (15, 17) for transferring plates (2) to the drum loader (5) and depositing them thereon.

2. Stacker according to claim 1, characterised in that a plurality of storage drums (4) are disposed one above another and are rotatable independently of one another, and in that each storage drum (4) has a drum loader (5) for inserting the plates (2) radially into the compartments (6) in the storage drum (4).

3. Stacker according to claim 2, characterised in that two units (13, 14) are provided, consisting of storage drums (4) disposed one above another, and in that the drum loaders (5) are disposed between these units (13, 14) and are so formed that each plate (2) can be supplied selectively to one or other of the units (13, 14).

4. Stacker according to one of claims 1 to 3, characterised in that the drum loader (5) has a conveyor element (9) on which a plate (2) moving vertically downwards can be deposited, in that the plate (2) deposited is insertable into a compartment (6) by the conveyor element (9), and in that the drum loader (5) has a rest (17) against which the plate (2) deposited on the conveyor element (9) can be placed in a standing position.

5. Stacker according to claim 4, characterised in that the drum loader (5) has a slide (15) which pivots a plate (2) to be deposited on the conveyor element (9) about an upper, fixed edge (2b) and thus moves the lower edge (2a) into a position above the conveyor element (9), so that upon further downward motion the plate (2) is deposited on the conveyor element (9).

6. Stacker according to claim 5, characterised in that a sensor (10) is provided, which indicates the presence of a plate (2) to be pivoted by the slide (15).

7. Stacker according to claim 6, characterised in that the sensor (10) responds to the lower edge (2a) of the plate (2).

8. Stacker according to one of claims 1 to 7, characterised in that the conveyor device (1) has carrying straps (3), in which a plate (2) is suspendible at the upper edge (2b) with a bent-back portion (2c).

9. Stacker according to one of claims 4 to 7, characterised in that the rest (17) is pivotable for manual removal of the plate (2).

## Revendications

1. Empileur avec un dispositif de transport (1) par lequel des plaques (2) peuvent être amenées individuellement au moins à une unité d'entreposage, l'unité d'entreposage présentant au moins un tambour d'entreposage (4) rotatif à cellules (6) ouvertes et au moins un chargeur de tambour (5) étant prévu, lequel reçoit les plaques (2) du dispositif de transport (1) et les dépose dans les cellules (6), caractérisé en ce que le dispositif de transport (1) transporte les plaques (2) parallèlement à l'axe de rotation du tambour d'entreposage (4) et en ce que le chargeur de tambour (5) présente des moyens (15, 17) par lesquels les plaques (2) peuvent être transmises au chargeur de tambour (5) et déposées sur celui-ci.

2. Empileur suivant la revendication 1, caractérisé en ce que plusieurs tambours d'entreposage (4) sont disposés l'un au-dessus de l'autre et peuvent tourner indépendamment l'un de l'autre et qu'à chaque tambour d'entreposage (4) est associé un chargeur de tambour (5) qui dépose les plaques (2) radialement dans les cellules (6) du tambour d'entreposage (4).

3. Empileur suivant la revendication 2, caractérisé en ce qu'il est prévu deux ensembles (13, 14) de tambours d'entreposage (4) disposés l'un au-dessus de l'autre et que les chargeurs de tambour (5) sont disposés entre ces ensembles (13, 14) et se présentent de telle manière que chaque plaque (2) peut être amenée au choix à l'un ou l'autre ensemble (13, 14).

4. Empileur suivant l'une des revendications 1 à 3, caractérisé en ce que le chargeur de tambour (5) présente un organe de transport (9) sur lequel peut être déposée une plaque (2) se déplaçant verticalement de haut en bas, que, par l'organe de transport (9), la plaque (2) déposée peut être introduite dans une cellule (6) et que le chargeur de tambour (5) présente une rampe (17) contre laquelle peut être posée verticalement la plaque (2) déposée sur l'organe de transport (9).

5. Empileur suivant la revendication 4, caractérisé en ce que le chargeur de tambour (5) présente un coulisseau (15) qui fait pivoter une plaque (2) à déposer sur l'organe de transport (9) sur une arête supérieure (2b) fixée et amène, de ce fait, l'arête inférieure (2a) dans une position au-dessus de l'organe de transport (9), de manière que, lors d'un nouveau déplacement vers le bas, la plaque (2) est placée sur l'organe de transport (9).

6. Empileur suivant la revendication 5, caractérisé en ce qu'il est prévu un détecteur (10) qui indique la présence d'une plaque (2) à pivoter par le coulisseau (15).

7. Empileur suivant la revendication 6, caractérisé en ce que le détecteur (10) réagit à l'arête inférieure (2a) de la plaque (2).

8. Empileur suivant l'une des revendications 1 à 7, caractérisé en ce que le dispositif de transport (1) présente des languettes de support (3) auxquelles peut être accrochée une plaque (2) par une courbure (2c) à l'arête supérieure (2b).

9. Empileur suivant l'une des revendications 4 à 7, caractérisé en ce que la rampe (17) est pivotable pour le prélèvement manuel de la plaque (2).
